# EUROPÄISCHE PATENTANMELDUNG

(11) **EP 4 795 915 A1**
(43) Veröffentlichungstag der Anmeldung: **26.08.2026**
(21) Anmeldenummer: 26159489.9
(22) Anmeldetag: 19.02.2026
(51) Int. Cl.: A01C 21/00, A01C 17/00

(54) **VERFAHREN UND AUSBRINGSYSTEM ZUM AUSBRINGEN VON AUSBRINGMATERIAL AUF EINER LANDWIRTSCHAFTLICHEN NUTZFLÄCHE**

(30) Priorität: 25.02.2025 DE 102025107079
(71) Anmelder: Amazonen-Werke H. Dreyer SE & Co. KG, 49205 Hasbergen (DE)
(72) Erfinder: Kielhorn, Arnd, 49205 Hasbergen-Gaste (DE); Merten, Niklas, 49205 Hasbergen-Gaste (DE)
(74) Vertreter: Heisel, Per-Christian

(57) **Zusammenfassung**

Verfahren zum Ausbringen von Ausbringmaterial (AM) auf einer landwirtschaftlichen Nutzfläche (N), umfassend die Schritte: Ausbringen eines Ausbringmaterials (AM), insbesondere eines organischen Düngers, mit teilbereichsspezifischen Ausbringmengenfehlern (AF) auf der landwirtschaftlichen Nutzfläche (N) im Rahmen eines die Ausbringmengenfehler (AF) verursachenden Ausbringvorgangs (I) und Ausbringen eines Ausbringmaterials (AM), insbesondere mineralischen Düngers, mit einer teilbereichsspezifisch angepassten Ausbringmenge (M) auf der landwirtschaftlichen Nutzfläche (N) im Rahmen eines Kompensationsausbringvorgangs (II), wobei mittels der teilbereichsspezifisch angepassten Ausbringmenge (M) des Ausbringmaterials (AM) im Kompensationsausbringvorgang (II) die teilbereichsspezifischen Ausbringmengenfehler (AF) auf der landwirtschaftlichen Nutzfläche (N) zumindest teilweise kompensiert werden.

## Beschreibung

Die Erfindung betrifft ein Verfahren zum Ausbringen von Ausbringmaterial auf einer landwirtschaftlichen Nutzfläche nach dem Oberbegriff nach Anspruch 1 und ein Ausbringsystem nach dem Oberbegriff nach Anspruch 11.

Beim Ausbringen von Ausbringmaterial, wie beispielsweise organischen Düngers, kann der Ausbringvorgang mit Ausbringmengenfehlern erfolgen und folglich können teilbereichsspezifische Ausbringmengenfehler auf der landwirtschaftlichen Nutzfläche vorliegen. Teilbereichsspezifische Ausbringmengenfehler können beispielsweise bei einer Kurvenfahrt auftreten, wenn die Ausbringmaschine die Querverteilung des Ausbringmaterials nicht oder nicht in ausreichendem Maße an die sich bei einer Kurvenfahrt ergebenden unterschiedlichen Geschwindigkeiten über Grund entlang der Arbeitsbreite anpassen kann. Zur Kompensation eines Ausbringmengenfehlers kann ein weiteres Ausbringmaterial, wie beispielsweise mineralischer Dünger, mit einer teilbereichsspezifisch angepassten Ausbringmenge auf der landwirtschaftlichen Nutzfläche im Rahmen eines Kompensationsausbringvorgangs ausgebracht werden.

Im Stand der Technik sind Lösungen zum geregelten Ausbringen von Ausbringmaterial bekannt. Die Druckschriften DE 10 2010 046 832 B4 und DE 10 2016 122 945 A1 beschreiben jeweils ein Verfahren zur gleichmäßigen Verteilung von Dünger mittels Scheibenstreuer, wobei bei Kurvenfahrten Ausbringparameter, wie Aufgabepunkte der Streuscheiben und/oder Dosiermengen, kurveninnenseitig und kurvenaußenseitig angepasst werden. Darüber hinaus beschreibt die Druckschrift WO 2022/177804 A2 einen Zentrifugalverteiler. Des Weiteren offenbart die Druckschrift DE 10 2018 129 716 A1 das Ermitteln einer ungleichmäßigen Streugutverteilung auf einer landwirtschaftlichen Nutzfläche sowie das Ermitteln einer idealen Ausgleichsverteilung des Streuguts zum Ausgleichen der Ungleichmäßigkeiten der Streugutverteilung.

Organischer Dünger, insbesondere Gülle, wird bei Kurvenfahrten einer landwirtschaftlichen Ausbringmaschine auf einer landwirtschaftlichen Nutzfläche üblicherweise ohne eine Regelung der Ausbringmenge, und somit beispielsweise ohne Kurvenkompensation, ausgebracht. Dadurch, dass bei organischen Düngern wie Gülle die Wirkstoffe heterogen verteilt sind, erfolgt das Ausbringen der organischen Dünger auf einer landwirtschaftlichen Nutzfläche zudem mit einem ungleichmäßigen, insbesondere nicht-konstanten, Wirkstoffgehalt pro Volumen. Aufgrund der fehlenden Regelung der Ausbringmenge und/oder dem ungleichmäßigen Wirkstoffgehalt pro Volumen resultiert eine ungleichmäßige, durch die Düngerausbringung hervorgerufene, Nährstoffverteilung auf der landwirtschaftlichen Nutzfläche. Aufgrund der ungleichmäßigen Nährstoffverteilung auf der landwirtschaftlichen Nutzfläche kann keine gleichmäßige Nährstoffversorgung und somit kein gleichmäßiges Wachstum eines auf der landwirtschaftlichen Nutzfläche vorliegenden Pflanzenbestands gewährleistet werden.

Die der Erfindung zugrunde liegende Aufgabe besteht somit darin, die auf der Düngerausbringung basierende Nährstoffverteilung auf der landwirtschaftlichen Nutzfläche zu vergleichmäßigen.

Die der Erfindung zugrunde liegende Aufgabe wird durch ein Verfahren der eingangs genannten Art gelöst, wobei mittels der teilbereichsspezifisch angepassten Ausbringmenge des Ausbringmaterials im Kompensationsausbringvorgang die teilbereichsspezifischen Ausbringmengenfehler auf der landwirtschaftlichen Nutzfläche zumindest teilweise kompensiert werden.

Zusätzlich kann das Ausbringen des Ausbringmaterials im Rahmen des Kompensationsausbringvorgangs im Lichte der teilbereichsspezifischen Ausbringmengenfehler des die teilbereichsspezifischen Ausbringmengenfehler verursachenden Ausbringvorgangs geregelt werden.

Dadurch, dass mittels der teilbereichsspezifisch angepassten Ausbringmenge des Ausbringmaterials im Kompensationsausbringvorgang die teilbereichsspezifischen Ausbringmengenfehler auf der landwirtschaftlichen Nutzfläche zumindest teilweise kompensiert werden, resultiert ein gleichmäßiger oder zumindest vergleichmäßigter Nährstoffgehalt der landwirtschaftlichen Nutzfläche und folglich eine gleichmäßige oder zumindest vergleichmäßigte Nährstoffversorgung eines auf der landwirtschaftlichen Nutzfläche befindlichen Pflanzenbestands. Der organische Dünger kann Gülle, Jauche und/oder Mist umfassen. Folglich kann der organische Dünger feste und/oder flüssige Bestandteile aufweisen. Der Wirkstoffgehalt, insbesondere die Wirkstoffkonzentration, kann sensorisch erfasst werden. Die Ausbringmengenfehler betreffen Abweichungen von der Sollausbringmenge und/oder Sollwirkstoffkonzentration des auf der landwirtschaftlichen Nutzfläche auszubringenden oder ausgebrachten Ausbringmaterials. Die Sollausbringmenge des auf der landwirtschaftlichen Nutzfläche auszubringenden oder ausgebrachten Ausbringmaterials ist derart gewählt, dass ein gleichmäßiges Wachstum, insbesondere ein gleichmäßiger Feldaufgang eines auf der landwirtschaftlichen Nutzfläche befindlichen Pflanzenbestands gewährleistet wird. Die Sollausbringmenge kann beispielsweise in Abhängigkeit des Pflanzenbestands, insbesondere des Pflanzentyps des Pflanzenbestands, gewählt werden. Beispielsweise kann bei einem Mais umfassenden Pflanzenstand eine höhere Sollausbringmenge benötigt werden als bei einem Getreide umfassenden Pflanzenbestand. Folglich können die Ausbringmengenfehler ein ungleichmäßiges Wachstum, insbesondere einen ungleichmäßigen Feldaufgang, des Pflanzenbestands der landwirtschaftlichen Nutzfläche hervorrufen. Die Ausbringmengenfehler sind insbesondere bauartbedingt, beziehungsweise systembedingt, und/oder mittelbedingt. Die mittelbedingten Ausbringmengenfehler resultieren aus einer inhomogenen Verteilung von Düngerbestandteilen, insbesondere Wirkstoffen, in dem organischen Dünger. Die teilbereichsspezifischen Ausbringmengenfehler auf der landwirtschaftlichen Nutzfläche können im Rahmen des die Ausbringmengenfehler verursachenden Ausbringvorgangs auf einer Applikationskarte hinterlegt werden. Die Applikationskarte kann auf einer elektronischen Speichereinheit einer landwirtschaftlichen Ausbringmaschine gespeichert werden. Alternativ kann die Applikationskarte auf einem Server und/oder der Datenwolke, insbesondere mittels Cloud-Computing, gespeichert werden. Der mineralische Dünger kann Granulat und/oder Flüssigdünger betreffen. Der mineralische Dünger kann synthetisch hergestellt sein. Folglich kann der mineralische Dünger Kunstdünger betreffen. Die teilbereichsspezifisch angepasste Ausbringmenge kann auf Grundlage der Applikationskarte gewählt oder berechnet werden. Alternativ oder zusätzlich kann das Verfahren den Schritt umfassen: Einregeln, insbesondere teilbereichsspezifisches Einregeln, der Ausbringmenge des Ausbringmaterials, insbesondere organischen Düngers, auf Basis des Wirkstoffgehalts, insbesondere der Wirkstoffkonzentration, des Ausbringmaterials. Das Einregeln der Ausbringmenge des Ausbringmaterials kann während des den Ausbringmengenfehler verursachenden Ausbringvorgangs und/oder während des Kompensationsausbringvorgangs erfolgen.

In einer weiteren bevorzugten Ausführungsform des erfindungsgemäßen Verfahrens betreffen das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial das gleiche Ausbringmaterial oder voneinander abweichende Ausbringmaterialien. Das Ausbringmaterial kann einen Düngerguttyp, wie beispielsweise Gülle oder Granulat, betreffen. Alternativ kann das Ausbringmaterial einen Wirkstoff, wie beispielsweise Stickstoff oder Phosphor, betreffen. Wenn das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial das gleiche Ausbringmaterial betreffen, kann beispielsweise das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial jeweils Granulat, insbesondere dieselbe Sorte von Granulat, betreffen. Die Sorte von Granulat kann beispielsweise Kalkammonsalpeter, also einen Stickstoffdünger, oder Blaukorn, also einen Mehrnährstoffdünger, betreffen. Wenn das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial voneinander abweichende Ausbringmaterialien betreffen, kann beispielsweise das im Rahmen des die Ausbringmengenfehler verursachenden Ausbringvorgangs ausgebrachte Ausbringmaterial Gülle und das im Rahmen des Kompensationsausbringvorgangs ausgebrachte Ausbringmaterial Granulat betreffen. Das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial können dieselbe oder voneinander abweichende Düngewirkungen aufweisen. Das im Rahmen des die Ausbringmengenfehler verursachenden Ausbringvorgangs ausgebrachte Ausbringmaterial und das im Rahmen des Kompensationsausbringvorgangs ausgebrachte Ausbringmaterial können, zumindest teilweise, dieselben Hauptbestandteile, also Wirkstoffe, umfassen. Das im Rahmen des die Ausbringmengenfehler verursachenden Ausbringvorgangs ausgebrachte Ausbringmaterial kann einen oder mehrere Hauptbestandteile umfassen, ausgewählt aus der Gruppe bestehend aus: Stickstoff, Phosphor, Kalium, Magnesium, Schwefel, Kalzium, Spurenelemente. Das im Rahmen des Kompensationsausbringvorgangs ausgebrachte Ausbringmaterial kann einen oder mehrere Hauptbestandteile umfassen, ausgewählt aus der Gruppe bestehend aus: Stickstoff, Phosphor, Kalium, Magnesium, Schwefel, Kalzium, Spurenelemente.

In einer weiteren Ausführungsform des erfindungsgemäßen Verfahrens erfolgt der die Ausbringmengenfehler verursachende Ausbringvorgang zeitlich vor oder nach dem Kompensationsausbringvorgang. Wenn der die Ausbringmengenfehler verursachende Ausbringvorgang zeitlich vor dem Kompensationsausbringvorgang erfolgt, so können die teilbereichsspezifischen Ausbringmengenfehler auf der landwirtschaftlichen Nutzfläche zeitlich vor dem Kompensationsausbringvorgang auf einer Applikationskarte hinterlegt werden. Die auf der Applikationskarte hinterlegten teilbereichsspezifischen Ausbringmengenfehler auf der landwirtschaftlichen Nutzfläche können während des Kompensationsausbringvorgangs berücksichtigt werden. Die auf der Applikationskarte hinterlegten teilbereichsspezifischen Ausbringmengenfehler auf der landwirtschaftlichen Nutzfläche können, insbesondere wenn der die Ausbringmengenfehler verursachende Ausbringvorgang zeitlich nach dem Kompensationsausbringvorgang erfolgt, auf Grundlage der Geometrie der landwirtschaftlichen Nutzfläche, der während des die Ausbringmengenfehler verursachenden Ausbringvorgangs verwendeten landwirtschaftlichen Ausbringmaschine und/oder der während des die Ausbringmengenfehler verursachenden Ausbringvorgangs von der landwirtschaftlichen Ausbringmaschine zu befahrenden Fahrgassen, beziehungsweise Fahrspuren, simuliert werden. Somit können, wenn der die Ausbringmengenfehler verursachende Ausbringvorgang zeitlich nach dem Kompensationsausbringvorgang erfolgt, die simulierten teilbereichsspezifischen Ausbringmengenfehler berücksichtigt werden. Folglich können während des Kompensationsausbringvorgangs bauartbedingte und/oder systembedingte Abweichungen von der teilbereichsspezifischen Ausbringmenge erwartet und/oder einkalkuliert werden. Wenn der die Ausbringmengenfehler verursachende Ausbringvorgang zeitlich nach dem Kompensationsausbringvorgang erfolgt, so können die in einem älteren die Ausbringmengenfehler verursachende Ausbringvorgang auf der Applikationskarte hinterlegten teilbereichsspezifischen Ausbringmengenfehler auf der landwirtschaftlichen Nutzfläche berücksichtigt werden. Der ältere die Ausbringmengenfehler verursachende Ausbringvorgang kann in einem vorherigen Ausbringzyklus und/oder Jahr erfolgen. Der die Ausbringmengenfehler verursachende Ausbringvorgang und der Kompensationsausbringvorgang können in einem zeitlichen Abstand von Stunden, Wochen oder Monaten voneinander erfolgen. Der die Ausbringmengenfehler verursachende Ausbringvorgang und der Kompensationsausbringvorgang können in voneinander abweichenden Ausbringzeiten, insbesondere Düngerausbringzeiten, Jahreszeiten und/oder Jahresabschnitten erfolgen. Beispielsweise kann der die Ausbringmengenfehler verursachende Ausbringvorgang im Herbst und der Kompensationsausbringvorgang im Frühjahr erfolgen.

In einer anderen bevorzugten Ausführungsform des erfindungsgemäßen Verfahrens betrifft der teilbereichsspezifische Ausbringmengenfehler eine teilbereichsspezifische Über- und/oder Unterdosierung des Ausbringmaterials.

Die Ausbringmenge kann derart reduziert werden, dass keine Überdosierung erfolgt und folglich eine stärkere Unterdosierung eintreten kann. Aufgrund der stärkeren Unterdosierung ist eine stärkere Kompensation erforderlich. Die Ausbringmenge kann beispielsweise mittels eines Verringerns der auf den Aufgabepunkt der Streuscheibe aufgegebenen Menge des Ausbringmaterials reduziert werden.

Der teilbereichsspezifische Ausbringmengenfehler betrifft eine teilbereichsspezifische Ungleichdosierung des Ausbringmaterials. Wenn das Ausbringmaterial einen Dünger betrifft, so betrifft die Überdosierung eine Überdüngung und die Unterdosierung eine Unterdüngung. Alternativ kann die Ungleichdosierung eine Unterdosierung umfassen und zugleich überdosierungsfrei sein. Bei einer teilbereichsspezifischen Überdüngung weist die landwirtschaftliche Nutzfläche teilbereichsspezifisch einen den Soll-Nährstoffgehalt übersteigenden Ist-Nährstoffgehalt auf. Bei einer teilbereichsspezifischen Unterdüngung weist die landwirtschaftliche Nutzfläche teilbereichsspezifisch einen den Soll-Nährstoffgehalt unterschreitenden Ist-Nährstoffgehalt auf.

Mittels des Ausbringens des Düngers auf der landwirtschaftlichen Nutzfläche werden für den sich auf der landwirtschaftlichen Nutzfläche befindlichen und/oder auf der landwirtschaftlichen Nutzfläche zu pflanzenden Pflanzenbestand Nährstoffe zur Verfügung gestellt. Während des Lebenszyklus der Pflanzen des Pflanzenbestands werden die Nährstoffe allmählich abgebaut. Aufgrund der Überdüngung kann auf der landwirtschaftlichen Nutzfläche, zumindest bereichsweise, eine den Nährstoffbedarf der Pflanzen des Pflanzenbestands übersteigende Nährstoffmenge vorliegen. Wenn aufgrund der Überdüngung eine den Nährstoffbedarf der Pflanzen des Pflanzenbestands übersteigende Nährstoffmenge vorliegt, so werden die Nährstoffe während des Lebenszyklus der Pflanzen des Pflanzenbestands nicht vollständig abgebaut. Folglich wird aufgrund der Überdüngung die Wirtschaftlichkeit der Düngerausbringung reduziert. Ein Reduzieren der Überdüngung resultiert somit in einem effizienteren Einsatz von Dünger.

Die teilbereichsspezifisch angepasste Ausbringmenge betrifft vorzugsweise eine, insbesondere teilbereichsspezifische, Unter- und/oder Überdosierung des Ausbringmaterials. Die teilbereichsspezifisch angepasste Ausbringmenge betrifft eine teilbereichsspezifische Ungleichdosierung des Ausbringmaterials. Die teilbereichsspezifische Überdosierung kann durch eine reduzierte Ausbringmenge vermieden werden.

In einer anderen Ausführungsform des erfindungsgemäßen Verfahrens treten die teilbereichsspezifischen Ausbringmengenfehler bei Kurvenfahrten und/oder bei Geradeausfahrten einer landwirtschaftlichen Ausbringmaschine auf. Die teilbereichsspezifischen Ausbringmengenfehler treten in Kurvenbereichen, insbesondere dem Vorgewende, der landwirtschaftlichen Nutzfläche auf. Die Kurvenbereiche der landwirtschaftlichen Nutzfläche verlaufen entlang der Kurvenbahnen der Fahrgasse, beziehungsweise Fahrspur, auf der landwirtschaftlichen Nutzfläche. Wenn die teilbereichsspezifischen Ausbringmengenfehler bei Kurvenfahrten der landwirtschaftlichen Ausbringmaschine auftreten, so erfolgt kurveninnen eine Überdosierung und/oder kurvenaußen eine Unterdosierung des Ausbringmaterials. Die teilbereichsspezifischen Ausbringmengenfehler werden kurveninnen und/oder kurvenaußen kompensiert. Dadurch, dass die teilbereichsspezifischen Ausbringmengenfehler kurveninnen kompensiert werden, wird kurveninnen ein gleichmäßiger oder zumindest vergleichmäßigter Nährstoffgehalt der landwirtschaftlichen Nutzfläche gewährleistet. Dadurch, dass die teilbereichsspezifischen Ausbringmengenfehler kurvenaußen kompensiert werden, wird kurvenaußen ein gleichmäßiger oder zumindest vergleichmäßigter Nährstoffgehalt der landwirtschaftlichen Nutzfläche gewährleistet.

In einer anderen Ausführungsform des erfindungsgemäßen Verfahrens entstehen die bei Geradeausfahrten auftretenden teilbereichsspezifischen Ausbringmengenfehler aufgrund von Fehlüberlappungen von Ausbringfächern, insbesondere Streufächern, und/oder inhomogenen Wirkstoffen, insbesondere inhomogenen Wirkstoffkonzentrationen. Wenn das Ausbringmaterial von festen Bestandteilen, wie beispielsweise Granulat, gebildet wird, so sind die Ausbringfächer als Streufächer ausgebildet. Wenn das Ausbringmaterial von flüssigen Bestandteilen, wie beispielsweise Flüssigdünger, gebildet wird, so sind die Ausbringfächer als Spritzfächer ausgebildet.

In einer anderen bevorzugten Ausführungsform des erfindungsgemäßen Verfahrens wird das im Rahmen des die Ausbringmengenfehler verursachenden Ausbringvorgangs ausgebrachten Ausbringmaterial von einer ersten und das im Rahmen des Kompensationsausbringvorgangs ausgebrachte Ausbringmaterial von einer zweiten landwirtschaftlichen Ausbringmaschine ausgebracht. Die erste und zweite landwirtschaftliche Ausbringmaschine betreffen unterschiedliche Maschinen. Die erste und zweite landwirtschaftliche Ausbringmaschine können Bestandteil eines Fuhrparks, insbesondere eines Fuhrparks eines landwirtschaftlichen Lohnunternehmens, sein. Das Ausbringen des Ausbringmaterials mittels der ersten landwirtschaftlichen Ausbringmaschine kann beispielsweise ohne und das Ausbringen des Ausbringmaterials mittels der zweiten landwirtschaftlichen Ausbringmaschine mit einer Kurvenkompensation der teilbereichsspezifischen Ausbringmenge erfolgen.

In einer weiteren Ausführungsform des erfindungsgemäßen Verfahrens betreffen die erste und zweite landwirtschaftliche Ausbringmaschine voneinander abweichende Maschinentypen. Die erste landwirtschaftliche Ausbringmaschine kann einen Schleppschlauchverteiler, Schleppschuhverteiler, Breitverteiler, Güllegrubber und/oder Rohrverteiler zum Ausbringen von Gülle betreffen. Die zweite landwirtschaftliche Ausbringmaschine kann einen landwirtschaftlichen Düngerstreuer, beispielsweise pneumatischen Düngerstreuer oder Zentrifugalstreuer, oder eine, insbesondere Flüssigdünger ausbringende, landwirtschaftliche Feldspritze betreffen. Die erste und zweite landwirtschaftliche Ausbringmaschine weisen vorzugsweise dieselbe Spurweite auf. Vorzugsweise entspricht die Reifenbreite der ersten landwirtschaftlichen Ausbringmaschine der Reifenbreite der zweiten landwirtschaftlichen Ausbringmaschine. Alternativ weicht die Reifenbreite der ersten landwirtschaftlichen Ausbringmaschine von der Reifenbreite der zweiten landwirtschaftlichen Ausbringmaschine ab. Beispielsweise kann eine Gülle ausbringende landwirtschaftliche Ausbringmaschine, insbesondere aufgrund ihres Eigengewichts, eine gegenüber einem Düngerstreuer, wie beispielsweise einem Zentrifugalstreuer, erhöhte Reifenbreite aufweisen. Die erste und zweite landwirtschaftliche Ausbringmaschine können voneinander abweichende Arbeitsbreiten aufweisen. Die voneinander abweichenden Arbeitsbreiten sind vorzugsweise Vielfache voneinander. Wenn die voneinander abweichenden Arbeitsbreiten Vielfache voneinander sind, so kann jeweils dasselbe Fahrgassensystem genutzt, insbesondere befahren, werden. Die erste landwirtschaftliche Ausbringmaschine kann sich beim Ausbringen des Ausbringmaterials mit einer ersten Vortriebsgeschwindigkeit auf der landwirtschaftlichen Nutzfläche bewegen. Die zweite landwirtschaftliche Ausbringmaschine kann sich beim Ausbringen des Ausbringmaterials mit einer zweiten Vortriebsgeschwindigkeit auf der landwirtschaftlichen Nutzfläche bewegen. Die erste Vortriebsgeschwindigkeit kann einen von der zweiten Vortriebsgeschwindigkeit abweichenden Wert aufweisen. Wenn die erste und zweite landwirtschaftliche Ausbringmaschine voneinander abweichende Arbeitsbreiten aufweisen, so kann die erste, beziehungsweise zweite, landwirtschaftliche Ausbringmaschine teilbreitenspezifische Übergrundgeschwindigkeiten, insbesondere bei Kurvenfahrten, aufweisen, die die zweite, beziehungsweise erste, landwirtschaftliche Ausbringmaschine nicht aufweist. Die Vortriebsgeschwindigkeit und/oder Kurvenradien können die Ausbringmenge des Ausbringmaterials beeinflussen. Die Vortriebsgeschwindigkeit kann teilbereichsspezifisch unterschiedlich sein. Die Übergrundgeschwindigkeit, beziehungsweise Bahngeschwindigkeit, unterschiedlicher Teilbreiten der landwirtschaftlichen Ausbringmaschinekann voneinander abweichende Werte aufweisen. Bei einer Kurvenfahrt weist die landwirtschaftliche Ausbringmaschine teilbereichsspezifisch, insbesondere teilbreitenspezifisch, unterschiedliche Übergrundgeschwindigkeiten auf. Bei einer Kurvenfahrt weisen die Teilbreiten der landwirtschaftlichen Ausbringmaschine kurveninnen eine höhere Übergrundgeschwindigkeit auf als kurvenaußen. Folglich wird das Ausbringmaterial kurveninnen mit einer höheren, insbesondere flächenspezifischen, Ausbringmenge ausgebracht als kurvenaußen. Die landwirtschaftliche Ausbringmaschine weist eine konstante Vortriebsgeschwindigkeit auf.

Damit mittels eines landwirtschaftlichen Düngerstreuers, insbesondere Zentrifugalstreuers, Ausbringmaterial, insbesondere Granulat, in beabsichtigter Weise auf einer landwirtschaftlichen Nutzfläche ausgebracht werden kann, werden die Arbeitsparameter des Düngerstreuers in geeigneter Weise eingestellt. Die Arbeitsparameter umfassen die Drehzahl der zumindest einen Streuscheibe des landwirtschaftlichen Düngerstreuers, den Aufgabepunkt des Ausbringmaterials auf die Streuscheibe und/oder die Dosiermenge des Ausbringmaterials auf die Streuscheibe. Typischerweise werden die Arbeitsparameter für eine beabsichtigte Arbeitsbreite bestimmt. Die Arbeitsbreite kann durch ein angelegtes Fahrgassensystem vorgegeben sein oder zur Verringerung der Anzahl nötiger Feldüberfahrten maximiert werden. Die Arbeitsbreite reicht ausgehend von einer Fahrgasse, in der sich der Düngerstreuer befindet, zur Mitte der auf beiden Seiten benachbarten Fahrgassen. Für jede beabsichtigte Arbeitsbreite können, beispielsweise auf Basis hinterlegter Zusammenhänge, geeignete Arbeitsparameter für den Düngerstreuer eingestellt werden. Durch Einstellung geeigneter Arbeitsparameter wird die Einhaltung der beabsichtigten Arbeitsbreite bei gleichzeitig hoher Verteilqualität des Ausbringmaterials sichergestellt.

Die Drehzahl der Streuscheibe bestimmt die kinetische Energie des ausgebrachten Ausbringmaterials und damit dessen Wurfweite. Eine höhere Drehzahl bewirkt eine höhere Wurfweite des ausgebrachten Ausbringmaterials. Eine niedrigere Drehzahl bewirkt eine niedrigere Wurfweite des ausgebrachten Ausbringmaterials.

Der Aufgabepunkt des Ausbringmaterials auf die Streuscheibe bestimmt den mittleren Wurfwinkel des Ausbringmaterials. Der mittlere Wurfwinkel ist definiert als Winkel zwischen einer in Fahrtrichtung liegenden, durch den Mittelpunkt der Streuscheibe verlaufenden, Bezugsachse und einer Verbindungslinie zwischen dem Schwerpunkt der Dichteverteilung des ausgebrachten Ausbringmaterials und dem Mittelpunkt der Streuscheibe. Der Aufgabepunkt kann in konzentrischer und/oder radialer Richtung der Streuscheibe eingestellt werden. Eine Verschiebung des Aufgabepunktes in konzentrischer Richtung bewirkt eine Verlagerung des Schwerpunktes der Dichteverteilung. Eine Verschiebung des Aufgabepunktes in konzentrischer Richtung entspricht daher einer Verschiebung des mittleren Wurfwinkels, insbesondere um einen nahezu gleichen Winkelbetrag. Eine Verschiebung des Aufgabepunktes in radialer Richtung bewirkt eine Veränderung der Breite der Dichteverteilung. Eine Verschiebung des Aufgabepunktes in radialer Richtung nach innen bewirkt aufgrund größerer Verweildauern des Ausbringmaterials auf der Streuscheibe einer Verbreiterung der Dichteverteilung. Eine Verschiebung des Aufgabepunktes in radialer Richtung nach außen bewirkt aufgrund kleinerer Verweildauern des Ausbringmaterials auf der Streuscheibe das Gegenteil.

Eine Veränderung der Dosiermenge auf die Streuscheibe kann eine überlagerte Veränderung des mittleren Wurfwinkels und der Breite der Dichteverteilung bewirken. Dies wird als sogenannter Mengeneffekt bezeichnet. Eine Vergrößerung der Dosiermenge bewirkt eine Vergrößerung der Fläche, innerhalb derer das Ausbringmaterial auf die Streuscheibe trifft. Dies ist mit einer überlagerten Änderung des Aufgabepunktes in radialer und konzentrischer Richtung für verschiedene Anteile des auf die Streuscheibe treffenden Ausbringmaterials in oben beschriebener Weise vergleichbar.

In einer weiteren Ausführungsform des erfindungsgemäßen Verfahrens wird im Rahmen des die Ausbringmengenfehler verursachenden Ausbringvorgangs, zumindest teilweise, dieselbe Fahrgasse befahren wie im Rahmen des Kompensationsausbringvorgangs. Dadurch, dass im Rahmen des die Ausbringmengenfehler verursachenden Ausbringvorgangs, zumindest teilweise, dieselbe Fahrgasse befahren wird wie im Rahmen des Kompensationsausbringvorgangs, wird die Notwendigkeit mehrerer, beziehungsweise unterschiedlicher, Fahrgassensysteme vermieden. Alternativ oder zusätzlich können im Rahmen des die Ausbringmengenfehler verursachenden Ausbringvorgangs landwirtschaftliche Ausbringmaschinen derselben Arbeitsbreite wie im Rahmen des Kompensationsausbringvorgangs eingesetzt werden. Alternativ oder zusätzlich kann die im Rahmen des die Ausbringmengenfehler verursachenden Ausbringvorgang verwendete Arbeitsbreite ein Vielfaches der im Rahmen des Kompensationsausbringvorgang verwendeten Arbeitsbreite sein. Die erste landwirtschaftliche Ausbringmaschine kann, zumindest teilweise, dieselbe Fahrgasse befahren wie die zweite landwirtschaftliche Ausbringmaschine. Alternativ oder zusätzlich können die erste und zweite landwirtschaftliche Ausbringmaschine, zumindest teilweise, voneinander abweichende Fahrgassen befahren, beispielsweise aufgrund voneinander abweichender Arbeitsbreiten und/oder Ausbringfächer der ersten und zweiten landwirtschaftlichen Ausbringmaschine.

In einer weiteren bevorzugten Ausführungsform des erfindungsgemäßen Verfahrens wird die teilbereichsspezifisch angepasste Ausbringmenge über die Ausrichtung einer Wurfschaufel, den Aufgabepunkt des Ausbringmaterials auf einer Streuscheibe, die Dosiermenge des Ausbringmaterials, die Abwurfposition, insbesondere den Abwurfwinkel, des Ausbringmaterials und/oder die Drehzahl einer Streuscheibe eingestellt. Durch das Einstellen des Aufgabepunkts wird die Ausbringmenge und/oder Wurfweite des Ausbringmaterials beeinflusst. Durch das Einstellen der Dosiermenge des Ausbringmaterials wird die Dosiermenge des Ausbringmaterials auf der landwirtschaftlichen Nutzfläche, insbesondere teilflächenspezifisch, beeinflusst. Durch das Einstellen der Abwurfposition, insbesondere des Abwurfwinkels des Ausbringmaterials, wird die Wurfweite und/oder der Ausbringfächer, insbesondere Streufächer, des Ausbringmaterials beeinflusst. Die Abwurfposition kann beispielsweise durch die Ausrichtung und/oder Oberflächenrauheit der Wurfschaufel, den Aufgabepunkt des Ausbringmaterials, die Drehzahl der Streuscheibe und/oder die Oberflächenrauheit der Streuscheibe beeinflusst, insbesondere eingestellt, werden. Die Abwurfposition definiert insbesondere die Wurfrichtung. Durch das Einstellen der Drehzahl der Streuscheibe wird die Wurfweite und/oder Wurfrichtung des Ausbringmaterials auf der landwirtschaftlichen Nutzfläche beeinflusst.

Die der Erfindung zugrunde liegende Aufgabe wird ferner gelöst durch ein Ausbringsystem der eingangs genannten Art, wobei das Ausbringsystem dazu eingerichtet ist, Ausbringmaterial gemäß eines Verfahrens nach einer der vorstehend beschriebenen Ausführungsformen auf einer landwirtschaftlichen Nutzfläche auszubringen. Hinsichtlich der Vorteile und Modifikationen des erfindungsgemäßen Ausbringsystems wird somit zunächst auf die Vorteile und Modifikationen des erfindungsgemäßen Verfahrens verwiesen.

Das Ausbringsystem kann beispielsweise eine erste und zweite landwirtschaftliche Ausbringmaschine umfassen. Die erste landwirtschaftliche Ausbringmaschine kann dazu eingerichtet sein, organischen Dünger, insbesondere Gülle, auszubringen. Die zweite landwirtschaftliche Ausbringmaschine kann dazu eigerichtet sein, mineralischen Dünger, insbesondere Granulat, auszubringen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße landwirtschaftliche Ausbringmaschine während des Ausbringens eines Ausbringmaterials auf einer landwirtschaftlichen Nutzfläche;
- Fig. 2: eine Diagrammdarstellung der während eines Ausbringvorgangs ausgebrachten Ausbringmenge;
- Fig. 3: eine alternative Diagrammdarstellung zu der während des der Fig. 2 zugrundeliegenden Ausbringvorgangs ausgebrachten Ausbringmenge;
- Fig. 4: eine Diagrammdarstellung der während eines weiteren Ausbringvorgangs ausgebrachten Ausbringmenge;
- Fig. 5: eine alternative Diagrammdarstellung zu der während des der Fig. 4 zugrundeliegenden Ausbringvorgangs ausgebrachten Ausbringmenge;
- Fig. 6: eine Diagrammdarstellung zu der auf Grundlage des Ausbringmengenfehlers des dem der Fig. 4 zugrundeliegenden Ausbringvorgangs geregelten Kompensationsausbringvorgangs ausgebrachten Ausbringmenge;
- Fig. 7: eine erfindungsgemäße landwirtschaftliche Ausbringmaschine während des Ausbringens eines Ausbringmaterials auf einer landwirtschaftlichen Nutzfläche;
- Fig. 8: eine Diagrammdarstellung der während des in der Fig. 7 abgebildeten Ausbringvorgangs ausgebrachten Ausbringmenge;
- Fig. 9: eine Diagrammdarstellung zu der während eines auf Grundlage des Ausbringmengenfehlers des dem der Fig. 8 zugrundeliegenden Ausbringvorgangs geregelten Kompensationsausbringvorgangs ausgebrachten Ausbringmenge;
- Fig. 10: eine Diagrammdarstellung der addierten Ausbringmengen aus Fig. 8 und Fig. 9;
- Fig. 11: eine Diagrammdarstellung der während eines Ausbringvorgangs ausgebrachten Ausbringmenge;
- Fig. 12: eine Diagrammdarstellung der während eines weiteren Ausbringvorgangs ausgebrachten Ausbringmenge; und
- Fig. 13: eine Diagrammdarstellung zu der während eines im Lichte des Ausbringmengenfehlers des dem der Fig. 11 oder des dem der Fig. 12 zugrundeliegenden Ausbringvorgangs geregelten Kompensationsausbringvorgangs ausgebrachten Ausbringmenge.

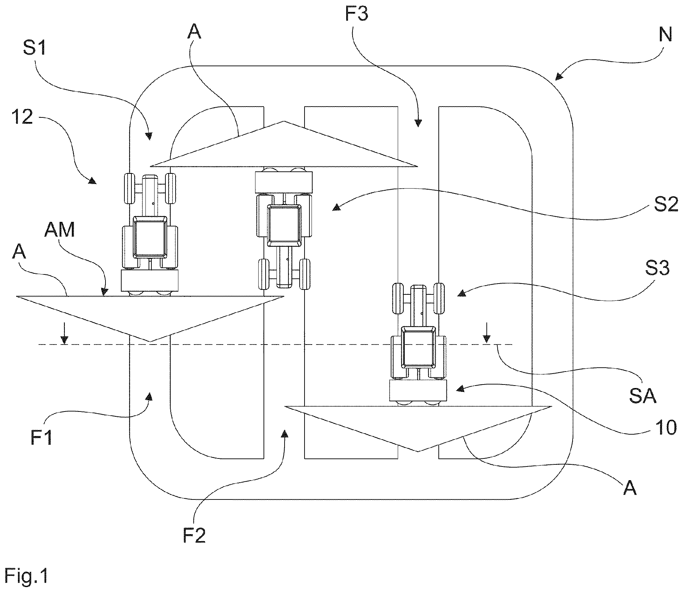

Die Fig. 1 zeigt die landwirtschaftliche Ausbringmaschine 10, welche von dem auf der landwirtschaftlichen Nutzfläche N befindlichen Traktor 12 getragen wird. Die landwirtschaftliche Ausbringmaschine 10 ist als Düngerstreuer ausgebildet.

Mittels der als Düngerstreuer, insbesondere Zentrifugaldüngerstreuer, ausgebildeten landwirtschaftlichen Ausbringmaschine 10 wird als Dünger ausgebildetes Ausbringmaterial AM, insbesondere organischer oder mineralischer Dünger, auf der landwirtschaftlichen Nutzfläche N ausgebracht. Mittels der landwirtschaftlichen Ausbringmaschine 10 wird das als Dünger ausgebildete Ausbringmaterial AM in einem als Streufächer ausgebildeten Ausbringfächer A auf der landwirtschaftlichen Nutzfläche N ausgebracht. Der Ausbringfächer A beschreibt die Verteilung des von der landwirtschaftlichen Ausbringmaschine 10 geworfenen und im Wurf befindlichen Düngers, bevor der Dünger auf den Boden der landwirtschaftlichen Nutzfläche N auftrifft. Der Ausbringfächer A weist eine Nierenform auf.

Während eines ersten Ausbringschritts S1 befährt der Traktor 12 die geradlinig verlaufende erste Fahrgasse F1. Folglich wird während des ersten Ausbringschritts S1 die landwirtschaftliche Ausbringmaschine 10 entlang der geradlinig verlaufenden ersten Fahrgasse F1 bewegt. Während des ersten Ausbringschritts S1 wird der sich entlang der ersten Fahrgasse F1 erstreckende Bereich der landwirtschaftlichen Nutzfläche N auf Grundlage der Form des Ausbringfächers A mit dem mittels der landwirtschaftlichen Ausbringmaschine 10 ausgebrachten Düngers gedüngt.

Während eines zweiten Ausbringschritts S2 befährt der Traktor 12 die geradlinig verlaufende zweite Fahrgasse F2. Folglich wird während des zweiten Ausbringschritts S2 die landwirtschaftliche Ausbringmaschine 10 entlang der geradlinig verlaufenden zweiten Fahrgasse F2 bewegt. Während des zweiten Ausbringschritts S2 wird der sich entlang der zweiten Fahrgasse F2 erstreckende Bereich der landwirtschaftlichen Nutzfläche N auf Grundlage der Form des Ausbringfächers A mit dem mittels der landwirtschaftlichen Ausbringmaschine 10 ausgebrachten Düngers gedüngt.

Während eines dritten Ausbringschritts S3 befährt der Traktor 12 die geradlinig verlaufende dritte Fahrgasse F3. Folglich wird während des dritten Ausbringschritts S3 die landwirtschaftliche Ausbringmaschine 10 entlang der geradlinig verlaufenden dritten Fahrgasse F3 bewegt. Während des dritten Ausbringschritts S3 wird der sich entlang der dritten Fahrgasse F3 erstreckende Bereich der landwirtschaftlichen Nutzfläche N auf Grundlage der Form des Ausbringfächers A mit dem von der landwirtschaftlichen Ausbringmaschine 10 ausgebrachten Dünger gedüngt.

Der Ausbringfächer A weist während des ersten, zweiten und dritten Ausbringschritts S1-S3 dieselbe Form auf. Durch Anpassen von Ausbringparametern der landwirtschaftlichen Ausbringmaschine 10, wie beispielsweise der Wurfweite des Düngers, kann die Form des Ausbringfächers A verändert werden. Die Form des Ausbringfächers A ist vorzugsweise derart gewählt, dass sich die in dem ersten Ausbringschritt S1 und dem zweiten Ausbringschritt S2 gedüngten Bereiche der landwirtschaftlichen Nutzfläche N, zumindest bereichsweise, überlappen. Die Form des Ausbringfächers A ist vorzugsweise derart gewählt, dass sich die in dem zweiten Ausbringschritt S2 und dem dritten Ausbringschritt S3 gedüngten Bereiche der landwirtschaftlichen Nutzfläche N, zumindest bereichsweise, überlappen. Die Form des Ausbringfächers A kann beeinflusst, beziehungsweise verändert oder verformt, werden. Die Form des Ausbringfächers A kann durch Umwelteinflüsse, wie beispielsweise Wind oder Luftfeuchtigkeit beeinflusst, insbesondere deformiert, werden. Die Form des Ausbringfächers A kann durch das Anpassen maschinenspezifischer Arbeitsparameter, beziehungsweise Ausbringparameter, und/oder aufgrund der Fahrsituation, wie beispielsweise Kurvenfahrt und/oder Bergauffahrt, verändert, insbesondere gewählt, werden. Folglich kann der Ausbringfächer A eine von der in dieser Figur gezeigten Form abweichende Form annehmen. Die Form des Ausbringfächers A kann beispielsweise gestaucht werden oder eine abweichende Krümmung aufweisen.

Die maschinenspezifischen Arbeitsparameter umfassen die Drehzahl der Streuscheibe, den Aufgabepunkt des Ausbringmaterials AM auf die Streuscheibe des Düngerstreuers und/oder die Dosiermenge des Ausbringmaterials AM auf die Streuscheibe.

Alternativ zu dem Düngerstreuer kann Dünger, insbesondere Flüssigdünger, mittels einer landwirtschaftlichen Feldspritze auf der landwirtschaftlichen Nutzfläche ausgebracht werden. Hierbei kann der Ausbringvorgang analog zu den in Fig. 1 beschriebenen Ausführungen erfolgen.

Alternativ kann Dünger mittels eines pneumatischen Düngerstreuers auf der landwirtschaftlichen Nutzfläche ausgebracht werden. Hierbei kann der Ausbringvorgang analog zu den in Fig. 1 beschriebenen Ausführungen erfolgen.

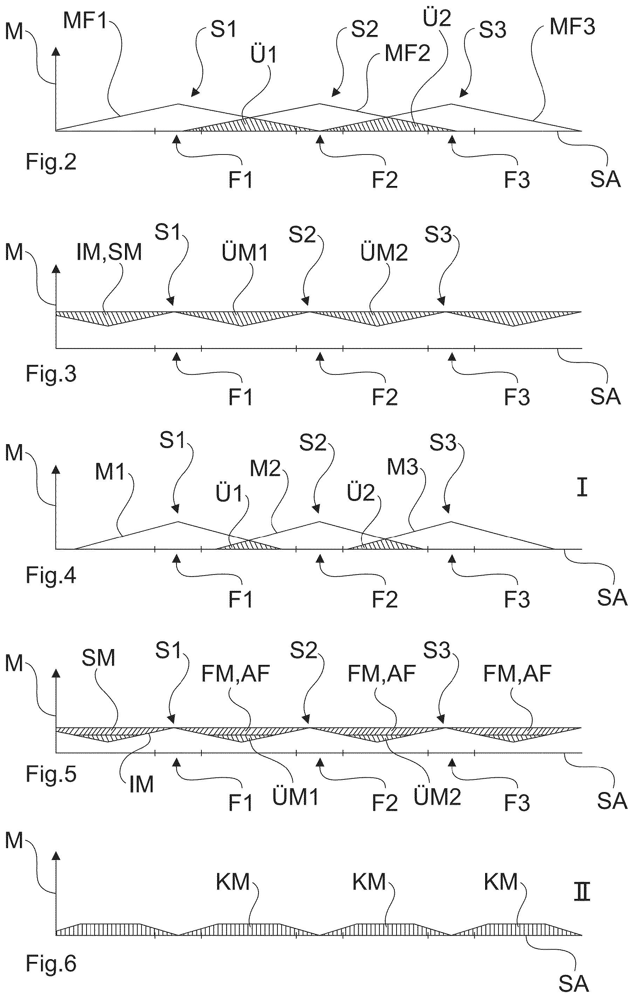

Die Fig. 2 zeigt die auf Grundlage des in der Fig. 1 beschriebenen ersten, zweiten und dritten Ausbringschritts S1-S3 entlang der Schnittachse SA auf der landwirtschaftlichen Nutzfläche N ausgebrachte Ausbringmenge M des Düngers.

Während des ersten Ausbringschritts S1 wird das Ausbringmaterial AM, also der Dünger, mit der ersten Ausbringmengenform MF1 ausgebracht. Während des zweiten Ausbringschritts S2 wird das Ausbringmaterial AM mit der zweiten Ausbringmengenform MF2 ausgebracht. Während des dritten Ausbringschritts S3 wird das Ausbringmaterial AM mit der dritten Ausbringmengenform MF3 ausgebracht.

Die erste, zweite und dritte Ausbringmengenform MF1-MF3 weisen dieselbe, insbesondere dreieckige, Form auf. Die erste und zweite Ausbringmengenform MF1, MF2 überlappen sich in dem ersten Überlappungsbereich Ü1. Die zweite und dritte Ausbringmengenform MF2, MF3 überlappen sich in dem zweiten Überlappungsbereich Ü2. Die in dem ersten Überlappungsbereich Ü1 mit der ersten Ausbringmengenform MF1 und die in dem ersten Überlappungsbereich Ü1 mit der zweiten Ausbringmengenform MF2 ausgebrachte Ausbringmenge addieren sich zu der ersten Überlappungsmenge ÜM1. Die in dem zweiten Überlappungsbereich Ü2 mit der zweiten Ausbringmengenform MF2 und die in dem zweiten Überlappungsbereich Ü2 mit der dritten Ausbringmengenform MF3 ausgebrachte Ausbringmenge addieren sich zu der zweiten Überlappungsmenge ÜM2.

Aus dem Addieren der Ausbringmenge benachbarter Ausbringmengenformen MF1-MF3 zu den Überlappungsmengen ÜM1, ÜM2 resultiert die Ist-Gesamtausbringmenge IM, wie in Fig. 3 dargestellt. Die Ist-Gesamtausbringmenge IM entspricht der Soll-Gesamtausbringmenge SM. Beim Vorliegen der gezeigten Ist-Gesamtausbringmenge IM erfolgt eine gleichmäßige Düngung der landwirtschaftlichen Nutzfläche N mit dem Dünger.

Die Fig. 4 zeigt die erste, zweite und dritte Ausbringmengenform MF1-MF3, mit welchen Ausbringmaterial im Rahmen eines Ausbringmengenfehler verursachenden Ausbringvorgangs I ausgebracht wird. Die erste, zweite und dritte Ausbringmengenform MF1-MF3 resultieren aus einer nicht optimalen Form des Ausbringfächers A. Aufgrund der nicht optimalen Form des Ausbringfächers A weisen die erste, zweite und dritte Ausbringmengenform MF1-MF3 Fehlüberlappungen auf. Der erste und zweite Überlappungsbereich Ü1, Ü2 ist jeweils kleiner als in Fig. 2.

Die resultierende Ist-Gesamtausbringmenge IM ist in der Fig. 5 dargestellt. Die Ist-Gesamtausbringmenge IM weist einen Zick-Zack-Verlauf auf. Die Ist-Gesamtausbringmenge IM weist einen von der Soll-Gesamtausbringmenge SM abweichenden Verlauf auf. Somit erfolgt auf Grundlage der Ist-Gesamtausbringmenge IM eine ungleichmäßige Ausbringung des Düngers auf der landwirtschaftlichen Nutzfläche N. Die Differenz zwischen der Soll-Gesamtausbringmenge SM und der Ist-Gesamtausbringmenge IM wird durch die Fehlausbringmenge FM beschrieben. Die Fehlausbringmenge FM stellt einen, insbesondere teilbereichsspezifischen, Ausbringmengenfehler AF dar.

Die Fig. 6 zeigt die Korrekturausbringmenge KM, die während eines Kompensationsausbringvorgangs II mittels einer weiteren landwirtschaftlichen Ausbringmaschine 10 auf der landwirtschaftlichen Nutzfläche N ausgebracht wird. Der Kompensationsausbringvorgangs II erfolgt zusätzlich zu dem in der Fig. 4 und Fig. 5 beschriebenen Ausbringmengenfehler verursachenden Ausbringvorgang I. Während des Kompensationsausbringvorgangs II wird Ausbringmaterial mit der Korrekturausbringmenge KM ausgebracht. Die Korrekturausbringmenge KM ist derart gewählt, dass mittels der Korrekturausbringmenge KM die in der Fig. 5 gezeigte Fehlausbringmenge FM kompensiert wird. Wenn der Kompensationsausbringvorgang II mittels eines Zentrifugaldüngersteuers erfolgt, so werden zudem die Drehzahl der Streuscheibe, der Aufgabepunkt des Ausbringmaterials auf der Streuscheibe, die Menge des Ausbringmaterials auf der Streuscheibe, die Ausrichtung, insbesondere der Winkel, und/oder Form, insbesondere die Länge und/oder Oberflächenbeschaffenheit, der Wurfschaufel und/oder der Streuschirm angepasst, damit das mit der Korrekturausbringmenge KM ausgebrachte Ausbringmaterial an den gewünschten Positionen der landwirtschaftlichen Nutzfläche verteilt wird. Folglich entspricht die Ist-Gesamtausbringmenge IM der Soll-Gesamtausbringmenge SM.

Wenn der Kompensationsausbringvorgang II mittels eines pneumatischen Düngerstreuers erfolgt, so werden der Streuschirm und/oder das Schalten der in den Düngerförderleitungen des pneumatischen Düngerstreuers angeordneten Ventile angepasst, damit das mit der Korrekturausbringmenge KM ausgebrachte Ausbringmaterial an den gewünschten Positionen der landwirtschaftlichen Nutzfläche verteilt wird.

Wenn der Kompensationsausbringvorgang II mittels einer Feldspritze erfolgt, so werden der Spritzfächer und/oder das Schalten der in den Düngerleitungen der Feldspritze angeordneten, insbesondere pulsweitenmodulierten, Ventile angepasst, damit das mit der Korrekturausbringmenge KM ausgebrachte Ausbringmaterial an den gewünschten Positionen der landwirtschaftlichen Nutzfläche verteilt wird. Wenn die Feldspritze pulsweitenmodulierte Ventile aufweist, wird insbesondere das Verhältnis zwischen Öffnungs- und Schließzeiten und/oder eine Öffnungsfrequenz der Ventile angepasst, um eine Ausbringmenge der Ventile zu ändern.

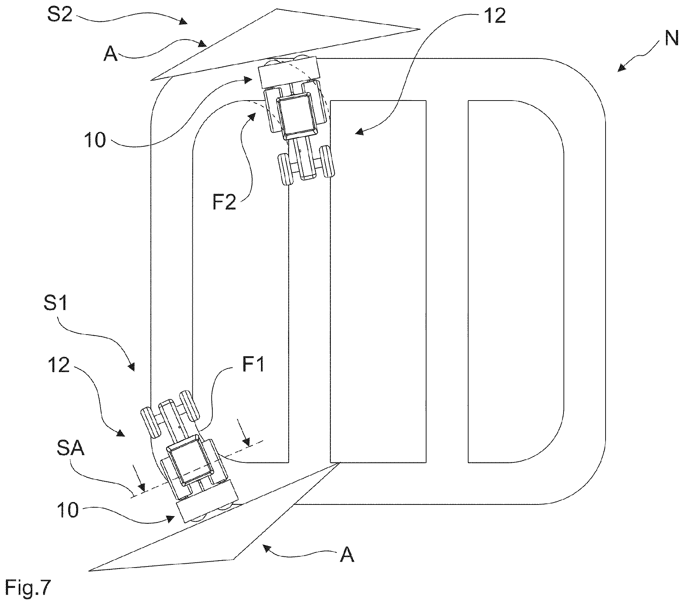

Die Fig. 7 zeigt die landwirtschaftliche Ausbringmaschine 10, welche mittels des Traktors 12 über die landwirtschaftliche Nutzfläche N bewegt wird. Während eines ersten Ausbringschritts S1 wird die landwirtschaftliche Ausbringmaschine 10 entlang der ersten Fahrgasse F1 durch einen Kurvenbereich bewegt. Folglich wird die landwirtschaftliche Ausbringmaschine 10 entlang der ersten Fahrgasse F1 kurvenförmig bewegt. Während des zweiten Ausbringschritts S2 wird die landwirtschaftliche Ausbringmaschine 10 entlang der zweiten Fahrgasse F2 durch einen Kurvenbereich bewegt. Das Ausbringen des Düngers mittels der landwirtschaftlichen Ausbringmaschine 10 auf der landwirtschaftlichen Nutzfläche N erfolgt mit einer ungeregelten Ausbringmenge. Folglich erfolgt keine Kurvenkompensation der Ausbringmenge des Düngers während des Ausbringens des Düngers beim kurvenförmigen Bewegen entlang der ersten und zweiten Fahrgasse F1, F2.

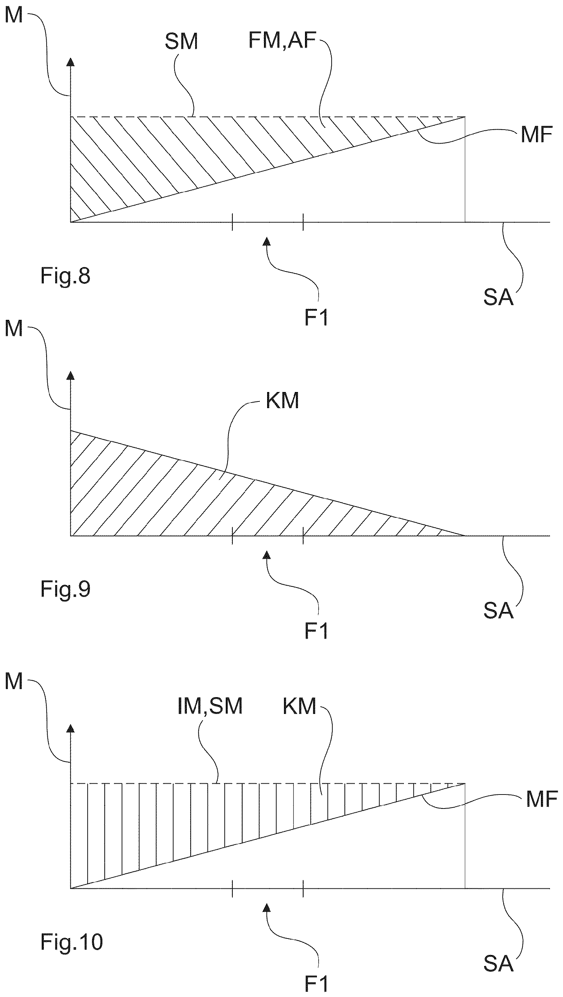

Somit erfolgt ein ungleichmäßiges Ausbringen des Düngers, wobei insbesondere kurveninnen eine Überdüngung und kurvenaußen eine Unterdüngung erfolgt, wie in Fig. 8 für die entlang der Schnittachse SA ausgebrachte Ausbringmenge M dargestellt. Die Ausbringmengenform MF entspricht nicht der Soll-Gesamtausbringmenge SM. Folglich liegt der als Fehlausbringmenge FM ausgebildete Ausbringmengenfehler AF vor. In einem weiteren Düngerausbringvorgang, insbesondere Kompensationsausbringvorgang, kann Dünger mit einer Korrekturausbringmenge KM ausgebracht werden, wie in Fig. 9 dargestellt. Die Korrekturausbringmenge KM ist an die Ausbringmengenform MF der Fig. 8 angepasst. Die aus Addition der mit der Ausbringmengenform MF ausgebrachten Ausbringmenge M und Korrekturausbringmenge KM resultierende Ist-Gesamtausbringmenge IM entspricht der Soll-Gesamtausbringmenge SM, wie in Fig. 10 dargestellt.

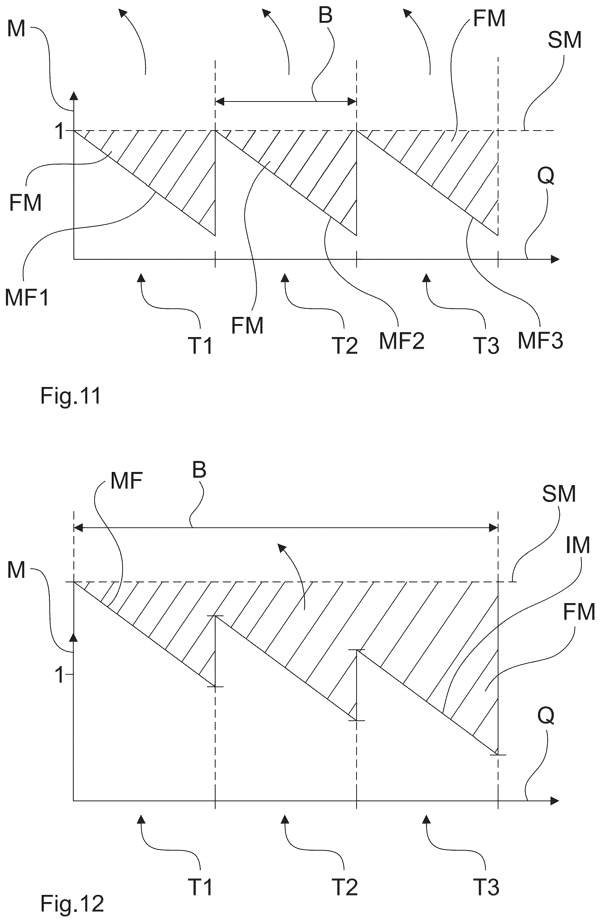

Die Fig. 11 zeigt die während einer Kurvenfahrt einer ersten landwirtschaftlichen Ausbringmaschine 10a entlang der Querrichtung Q in dem ersten, zweiten und dritten Teilbereich T1-T3 einer landwirtschaftlichen Nutzfläche ausgebrachte Ausbringmenge M des Düngers. Die Querrichtung Q verläuft parallel zur Oberfläche der landwirtschaftlichen Nutzfläche N und quer zur Fahrtrichtung der ersten landwirtschaftlichen Ausbringmaschine 10. Die erste landwirtschaftliche Ausbringmaschine 10a bringt Gülle auf der landwirtschaftlichen Nutzfläche N aus. Aufgrund der Arbeitsbreite B der ersten landwirtschaftlichen Ausbringmaschine 10a wird die Gülle in drei Ausbringschritten in dem ersten, zweiten und dritten Teilbereich T1-T3 ausgebracht. In dem ersten Teilbereich T1 wird die Gülle mit der ersten Ausbringmengenform MF1 ausgebracht. In dem zweiten Teilbereich T2 wird die Gülle mit der zweiten Ausbringmengenform MF2 ausgebracht. In dem dritten Teilbereich T3 wird die Gülle mit der dritten Ausbringmengenform MF3 ausgebracht. Die erste, zweite und dritte Ausbringmengenform MF1-MF3 weisen jeweils die gleiche Form auf. Somit liegt entlang des ersten, zweiten und dritten Teilbereichs T1-T3 nicht die Soll-Gesamtausbringmenge SM vor. Somit liegt entlang des ersten, zweiten und dritten Teilbereichs T1-T3 jeweils eine Fehlausbringmenge FM vor. Die Fehlausbringmenge FM stellt einen Ausbringmengenfehler dar.

Die Fig. 12 zeigt, analog zu Fig. 11, die während der Kurvenfahrt mittels einer zweiten landwirtschaftlichen Ausbringmaschine 10b entlang der Querrichtung in dem ersten, zweiten und dritten Teilbereich T1-T3 ausgebrachte Ausbringmenge M des Düngers. Der Dünger ist als Granulat ausgebildet. Die zweite landwirtschaftliche Ausbringmaschine 10b weist eine erhöhte Arbeitsbreite B auf gegenüber der ersten landwirtschaftlichen Ausbringmaschine 10a, insbesondere die dreifache Arbeitsbreite B der ersten landwirtschaftlichen Ausbringmaschine 10a. Folglich überfährt die zweite landwirtschaftliche Ausbringmaschine 10b in einem einzelnen Ausbringschritt den ersten, zweiten und dritten Teilbereich T1-T3. Somit wird in einem einzelnen Ausbringschritt mittels der zweiten landwirtschaftlichen Ausbringmaschine 10b Granulat entlang des ersten, zweiten und dritten Teilbereichs T1-T3 ausgebracht. Der Dünger wird mittels der zweiten Ausbringmaschine 10b mit einer ungeregelten Ausbringmenge ausgebracht. Folglich erfolgt kurveninnen eine Überdüngung und kurvenaußen eine Unterdüngung der landwirtschaftlichen Nutzfläche N. Die Ausbringmengenformen sind jeweils nahezu dreieckig ausgebildet.

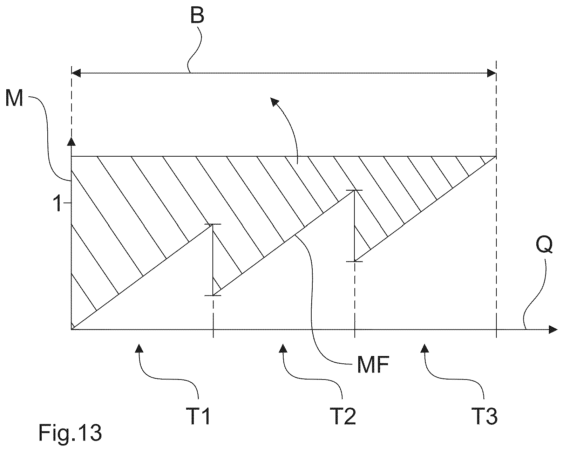

Die Fig. 13 ist analog zu Fig. 12 dargestellt, wobei der Dünger mittels der zweiten Ausbringmaschine 10b, insbesondere in einem Kompensationsausbringvorgang, mit einer geregelten Ausbringmenge ausgebracht wird. Wenn ein erstes Ausbringen auf Grundlage des in der Fig. 11 gezeigten Ausbringens und ein zweites Ausbringen auf Grundlage des in der Fig. 13 gezeigten Ausbringens erfolgt, so erfolgt mittels der auf Grundlage der in Fig. 13 ausgebrachten Ausbringmenge M eine Kompensation der in Fig. 11 vorliegenden Fehlausbringmenge FM. Aufgrund der Kompensation entspricht die Ist-Gesamtausbringmenge IM der Soll-Gesamtausbringmenge SM.

### Bezugszeichen

- 10, 10a, 10b: landwirtschaftliche Ausbringmaschine
- 12: Traktor

- A: Ausbringfächer
- AF: Ausbringmengenfehler
- AM: Ausbringmaterial
- B: Arbeitsbreite
- F1-F3: Fahrgasse
- FM: Fehlausbringmenge
- IM: Ist-Gesamtausbringmenge
- KM: Korrekturausbringmenge
- M: Ausbringmenge
- MF, MF1-MF3: Ausbringmengenform
- N: landwirtschaftliche Nutzfläche
- S1-S3: Ausbringschritt
- SA: Schnittachse
- SM: Soll-Gesamtausbringmenge
- Q: Querrichtung
- T1-T3: Teilbereich
- Ü1, Ü2: Überlappungsbereich

- I: Ausbringmengenfehler verursachender Ausbringvorgang
- II: Kompensationsausbringvorgang

## Patentansprüche

1. Verfahren zum Ausbringen von Ausbringmaterial (AM) auf einer landwirtschaftlichen Nutzfläche (N), umfassend die Schritte:
- Ausbringen eines Ausbringmaterials (AM), insbesondere eines organischen Düngers, mit teilbereichsspezifischen Ausbringmengenfehlern (AF) auf der landwirtschaftlichen Nutzfläche (N) im Rahmen eines die Ausbringmengenfehler (AF) verursachenden Ausbringvorgangs (I); und
- Ausbringen eines Ausbringmaterials (AM), insbesondere mineralischen Düngers, mit einer teilbereichsspezifisch angepassten Ausbringmenge (M) auf der landwirtschaftlichen Nutzfläche (N) im Rahmen eines Kompensationsausbringvorgangs (II),
**dadurch gekennzeichnet, dass** mittels der teilbereichsspezifisch angepassten Ausbringmenge (M) des Ausbringmaterials (AM) im Kompensationsausbringvorgang (II) die teilbereichsspezifischen Ausbringmengenfehler (AF) auf der landwirtschaftlichen Nutzfläche (N) zumindest teilweise kompensiert werden.

2. Verfahren nach Anspruch 1,
**dadurch gekennzeichnet, dass** das im Rahmen des die Ausbringmengenfehler (AF) verursachenden Ausbringvorgangs (I) ausgebrachte Ausbringmaterial (AM) und das im Rahmen des Kompensationsausbringvorgangs (II) ausgebrachte Ausbringmaterial (AM) das gleiche Ausbringmaterial (AM) oder voneinander abweichende Ausbringmaterialien (AM) betreffen.

3. Verfahren nach einem der vorstehenden Ansprüche,
**dadurch gekennzeichnet, dass** der die Ausbringmengenfehler (AF) verursachende Ausbringvorgang (I) zeitlich vor oder nach dem Kompensationsausbringvorgang (11) erfolgt.

4. Verfahren nach einem der vorstehenden Ansprüche,
**dadurch gekennzeichnet, dass** der teilbereichsspezifische Ausbringmengenfehler (AF) eine teilbereichsspezifische Über- und/oder Unterdosierung des Ausbringmaterials (AM) betrifft.

5. Verfahren nach einem der vorstehenden Ansprüche,
**dadurch gekennzeichnet, dass** die teilbereichsspezifischen Ausbringmengenfehler (AF) bei Kurvenfahrten und/oder bei Geradeausfahrten einer landwirtschaftlichen Ausbringmaschine (10) auftreten.

6. Verfahren nach Anspruch 5,
**dadurch gekennzeichnet, dass** die bei Geradeausfahrten auftretenden teilbereichsspezifischen Ausbringmengenfehler (AF) aufgrund von
- Fehlüberlappungen von Ausbringfächern (A), insbesondere Streufächern; und/oder
- inhomogenen Wirkstoffen, insbesondere inhomogenen
Wirkstoffkonzentrationen,
entstehen.

7. Verfahren nach einem der vorstehenden Ansprüche,
**dadurch gekennzeichnet, dass** das im Rahmen des die Ausbringmengenfehler (AF) verursachenden Ausbringvorgangs (I) ausgebrachte Ausbringmaterial (AM) von einer ersten und das im Rahmen des Kompensationsausbringvorgangs (II) ausgebrachte Ausbringmaterial (AM) von einer zweiten landwirtschaftlichen Ausbringmaschine (10a, 10b) ausgebracht wird.

8. Verfahren nach Anspruch 7,
**dadurch gekennzeichnet, dass** die erste und zweite landwirtschaftliche Ausbringmaschine (10a, 10b) voneinander abweichende Maschinentypen betreffen.

9. Verfahren nach einem der vorstehenden Ansprüche,
**dadurch gekennzeichnet, dass** im Rahmen des die Ausbringmengenfehler (AF) verursachenden Ausbringvorgangs (I), zumindest teilweise, dieselbe Fahrgasse (F1-F3) befahren wird wie im Rahmen des Kompensationsausbringvorgangs (II).

10. Verfahren nach einem der vorstehenden Ansprüche,
**dadurch gekennzeichnet, dass** die teilbereichsspezifisch angepasste Ausbringmenge (M) über
- die Ausrichtung einer Wurfschaufel;
- den Aufgabepunkt des Ausbringmaterials (AM) auf einer Streuscheibe;
- die Dosiermenge des Ausbringmaterials (AM);
- die Abwurfposition, insbesondere den Abwurfwinkel, des Ausbringmaterials (AM); und/oder
- die Drehzahl einer Streuscheibe
eingestellt wird.

11. Ausbringsystem mit einer oder mehreren landwirtschaftlichen Ausbringmaschinen (10),
**dadurch gekennzeichnet, dass** das Ausbringsystem dazu eingerichtet ist, Ausbringmaterial (AM) gemäß eines Verfahrens nach einem der vorstehenden Ansprüche auf einer landwirtschaftlichen Nutzfläche (N) auszubringen.
